# EUROPEAN PATENT SPECIFICATION

(11) **EP 2 379 988 B1**
(45) Date of publication and mention of the grant of the patent: **03.07.2013**
(21) Application number: 09801344.4
(22) Date of filing: 16.12.2009
(51) Int. Cl.: H04Q 9/00, G01D 21/00

(54) **SYSTEM AND METHOD FOR REMOTE READING OF RESONANT SENSORS**
SYSTEM UND VERFAHREN ZUR FERNABLESUNG VON RESONANZSENSOREN
SYSTÈME ET PROCÉDÉ DE LECTURE À DISTANCE DE CAPTEURS RÉSONANTS

(30) Priority: 19.12.2008 GB 0823088
(43) Date of publication of application: 26.10.2011
(73) Proprietor: GE Infrastructure Sensing, Inc., Billerica, MA 01821 (US)
(72) Inventor: BROWN, Roderick, Gordon, Nottingham NG3 5EN (GB); WALLS, Stephen, Thomas, Leicestershire LE67 6PJ (GB)
(74) Representative: Picker, Madeline Margaret
(86) International application number: PCT/US2009/068147
(87) International publication number: WO 2010/080410

(56) References cited:
- EP-A1- 1 923 674
- US-B1- 6 667 725

## Description

### FIELD OF THE INVENTION

The present invention is generally related to remote sensing, and more particularly, to reading data from a remote frequency output sensor or other frequency output device using an interrogating field.

### BACKGROUND OF THE INVENTION

Micro-Engineered Mechanical Structures (MEMS) incorporate components on a very small scale. MEMS devices may include components between 1 to 100 micrometers in size and generally range in size from about 20 micrometers to 1 millimeter.

While MEMS devices are gaining in popularity, use of MEMS technology for integration of a resonant sensor and a method of powering and interrogation by a field on a single chip is unknown.

EP-A-1 923 674 concerns a micro mechanical backscatter sensor comprising a receiver, a transmitter and a resonator. The resonator is arranged such that an external force applied thereto alters the resonant frequency of vibration thereof. The sensor comprises a capacitive element, arranged to be operatively connected to the receiver, the transmitter and the resonator. The capacitive element is arranged such that a voltage generated across the capacitor, in response to a received signal corresponding to the resonant frequency of the resonator, causes the resonator to resonate at the resonant frequency thereof.
US-A-6 667 725 concerns a radio frequency (RF) telemetry system for sensors and actuators, comprising a MEMS RF transmitting system having no directly connected power source.

The present invention discloses exemplary embodiments for reading of resonant sensors at a short distance and to do this with the minimum or no active electronic components. This will enable the manufacture of small, light, low cost, and high-temperature sensors for a variety of measurements that may be used in hostile and mobile environments. In particular, in the invention, a remotely read sensor may be manufactured containing no active electronic parts. Avoiding active electronic components frees the present invention from design limitations associated with semiconductor electronics, and especially the upper temperature limitation of such technology.

### BRIEF SUMMARY OF THE INVENTION

The present invention provides a system for reading data using a radio frequency field as defined in appended claim 1. The present invention further provides a method for reading data using a radio frequency field as defined in appended claim 11. The present invention also provides a sensor as defined in appended claim 15.

Aspects of the present invention provide a system, method, and sensor used for reading data using various types of field. All embodiments of the invention may comprise a reader and a sensor. The reader may emit a field of some nature which may be used to power the sensor or to stimulate it to resonance. The sensor may emit a field which is detected and decoded by the reader. The reader may make the sensed value available to other equipment.

In the invention, data is read using a radio-frequency (RF) field.

The system comprises a reader device structured to emit an RF field, and a sensor structured to receive the emitted RF field and re-radiate a signal to the reader device. The sensor includes a micro-engineered mechanical structure (MEMS). The reader device is further structured to receive and process the signal to obtain an original sensor element frequency.

According to another aspect of the present invention, the sensor includes a sensor aerial. The sensor aerial may be formed by a pattern of conductors integrated into the MEMS and operable to acquire energy from the RF field.

According to another embodiment, the RF field is of frequency *f* that gives rise to an incident field at the sensor.

According to another embodiment, the sensor includes a self-resonant sensor element and no wired connections.

According to another embodiment, the sensor includes a non-self-resonant element, and the reader includes a feedback amplifier.

According to another aspect of the present invention, the sensor may be powered by energy harvesting.

According to another aspect of the present invention, there is provided a method for reading data using a radio frequency (RF) field. The method comprises emitting the RF field to a sensor, receiving the emitted RF field at the sensor and re-radiating a signal obtained from the RF field to a reader device. The method may further comprise receiving the signal at the reader device, and processing the signal to obtain an original sensor element frequency.

According to another aspect of the present invention, there is provided a sensor providing a frequency output operating in a radio field environment, the sensor comprising an aerial structured to acquire energy from a radiated field at frequency *f*, and a frequency multiplying element operable to change a frequency of the incoming energy from the frequency *f* to frequency *fm*. In this aspect, fm is a harmonic of *f*, and a modulator may be included and structured to mix frequency *fm* with a sensor output frequency *f1* to produce upper and lower sidebands, *fm+f1* and *fm-f1,* respectively. The frequency *fm* and the upper and lower sidebands are then re-radiated by the aerial for reception by a reading device.

### BRIEF DESCRIPTION OF THE DRAWINGS

The above and other aspects of the present invention will become apparent and more readily appreciated from the following description of exemplary embodiments, taken in conjunction with the accompany drawings of which:

FIG. 1 depicts a system for reading data using a radio frequency (RF) field using a self-resonant sensor element according to an exemplary embodiment of the invention;

FIG. 2 depicts a system for reading data using a RF field using a non self-resonant sensor element according to an exemplary embodiment of the invention;

FIG. 3 depicts a system for reading data using a RF field using a self-resonant sensor element having a micro-engineered mechanical structure according to an exemplary embodiment of the invention; and

FIG. 4 depicts a system for reading data using a RF field using a non self-resonant sensor element having a micro-engineered mechanical structure according to an exemplary embodiment of the invention.

### DETAILED DESCRIPTION OF THE INVENTION

Reference will now be made in detail to the exemplary embodiments of the present invention, examples of which are illustrated in the accompanying drawings. Wherever possible, the same reference numbers are used throughout the drawings to refer to the same or like parts.

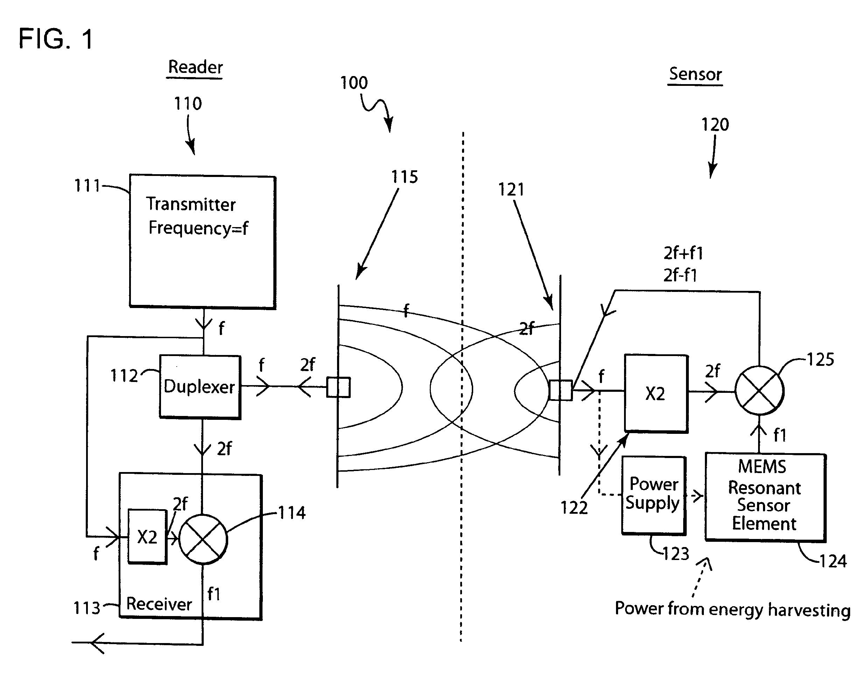

FIG. 1 depicts a system 100 for reading data using a radio frequency (RF) field using a self-resonant sensor element according to an exemplary embodiment of the invention. The system includes a reader device 110 structured to emit the RF field. The reader device 110 may include a transmitter 111, a duplexer 112, and a receiver 113.

The transmitter 111 is operable to emit a radio frequency (RF) field of frequency *f*. The radiated RF field gives rise to an incident field at a sensor 120. In an exemplary embodiment, the sensor 120 may be located within about 3 meters from the reader device 110, although the separation distance between the reader device 110 and sensor 120 is not to be limited by this example.

The reader device 110 may also include one or more reader aerials 115 providing a desired coverage angle (not shown) for use in transmitting to and receiving RF signals from the sensor 120. The duplexer 112 is operable to combine two or more signals into a common channel or medium to increase signal transmission efficiency.

The receiver 113 may include a de-modulator 114 operable to demodulate a received spectrum from the sensor 120. The received spectrum from the sensor 120 may be readily demodulated at the reader device 110 by reference to the radiated frequency *f* as the spectrum may be centered on a harmonic of *f*. Thus, the sensor frequency *f1* can be extracted irrespective of the exact radiated frequency value or any drift in this value.

The output of the reader device 110 is the resonant frequency of the sensor 120. As the value measured by the sensor 120 is represented by this frequency, no measurement errors are introduced by drift in the radiated frequency. Further, as long as the received signal-to-noise (SNR) ratio is adequate, neither amplitude variation caused by range changes to the sensor 120, orientation, nor obstruction will not degrade accuracy.

Sensor 120 may include a sensor aerial 121, a frequency multiplying element 122, a power supply 123, a resonant sensor element 124, and a modulator 125.

The sensor aerial 121 may be designed to efficiently acquire energy from the reader radiated field at frequency *f*. The sensor aerial 121 may be a discrete component as shown, or in another exemplary embodiment, depending on the value of *f* chosen, the sensor aerial 121 may be a pattern of conductors integrated into the sensor 120, such as incorporated into a micro-engineered mechanical structure (MEMS) included in sensor 120.

The frequency multiplying element 122 is operable to change the frequency of the incoming RF energy acquired by the aerial from frequency fto frequency *fm*, where *fm* is a harmonic of *f*.

In the embodiment, the received radio frequency is multiplied to enable the re-radiated signal to be received at reader device 110 without interference from the incident field. This multiplication requires the generation of harmonics that, in turn, requires a multiplier component or a non-linear device. A device, for example, a diode may perform this function at lower temperatures either as a discreet component or formed onto the MEMS structure along with the sensor 120. A circuit, such as a filter circuit (not shown) may select the required harmonic from the multiplier output signal. The filter circuit may be made from high temperature components such as transmission lines.

The modulator 125 mixes the shifted frequency *fm* with the sensor output frequency *f1* so as to produce upper and lower sidebands fm+f1 and fm-f1. In the embodiment shown in FIG. 1A, the frequency multiplying element 122 may apply a multiplication by 2, such that the upper and lower sidebands are 2f+f1 and 2f-f1. These frequencies may then be re-radiated by the sensor aerial 121, or an additional aerial (not shown), such that the reader device 110 can detect this spectrum of *fm* and sidebands.

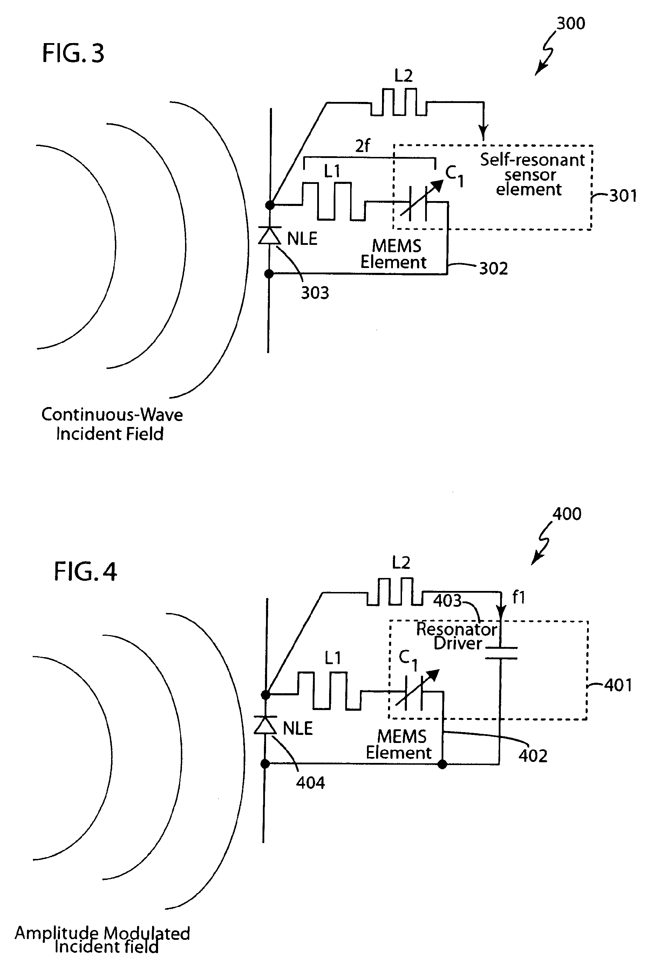

Modulation of the re-radiated frequency (*2f, 3f,* etc.) at the sensor 120 may be by means of an electronic device, such as a diode or other non-linear or multiplying device (see FIGs 3 and 4). In an exemplary embodiment, the re-radiated frequency is made by mechanical means so as to minimize and/or eliminate electronic components on the sensor. This may occur, for example, in a discrete modulator component or all the functionality may be highly integrated into the sensor 120 itself.

As an example, one embodiment of the modulator 125 may be a capacitive element. This capacitive element may change capacity as the resonant structure flexes by the displacement of the plates of the capacitor. The capacitor may therefore be a part of a MEMS sensor element if employed. RF energy from the frequency multiplying element 122 may be presented to the capacitor and returned to the sensor aerial 121 having been modulated with the frequency of the sensor 120.

Included in exemplary embodiments of the invention, a number of means of generating amplitude modulation from a varying capacitance may include using the impedance of the capacitor in series with the signal to be modulated, the varying capacitor and part of a capacitive potential divider, the capacitance altering the resonant frequency of a coil or transmission line so changing its impedance, and the capacitance forming part of a bridge circuit which is then unbalanced by the capacitance change. These methods may have an advantage in different physical implementations and at different frequencies.

Another modulator capable of one-hundred percent modulation may be implemented using a switch contact in place of a capacitor on the resonant element and to pass the multiplier signal though this switch to the sensor aerial 121.

In another embodiment, a MEMS structure of the sensor 120 may use the resonant sensor element 124 as the sensing element and the sensor aerial. As such, the received energy at *f* may be taken from the center of the element (tuned as a half-wave dipole) to apply it to the multiplying diode (becoming *fm*) and, through a printed inductor or transmission line, apply this back to the end or the resonant sensor element 124 through a capacitive plate. In this way, all functions may be highly integrated. An example of this embodiment would include a microwave, low temperature (diode limited) sensor 120.

As shown in FIG. 1, the sensor 120 may be powered from a conventional power supply 123. Still, in an exemplary embodiment of the invention, power may be supplied to the sensor 120, such as at the resonant sensor element 124, by scavenging of energy from the surrounding, for example, from thermal vibration or other environmental conditions. Further, the sensor aerial 121 may provide power to the sensor 120 via rectification of the RF voltage.

In still another power option, the RF field itself may directly power the sensor 120. As an example, the resonant sensor element 124 may be used as a dipole at the frequency *f* Current may then be concentrated at the center of the dipole. This configuration will cause a temperature rise concentrated at the center of the resonant sensor element124. If the resonant sensor element 125 includes layers of two materials with differing temperature coefficients of expansion, then the resonator sensor element 125 will deflect. When grounded plates are arranged adjacent to the ends of the resonator sensor element 125, then as it deflects, the end capacitance of the dipole will change, in turn moving the resonant frequency of the dipole.
This in turn will move the current maxima away from the dipole center causing the element to restore. In this way the resonator sensor element 125 is caused to oscillate directly powered from the radiated field.

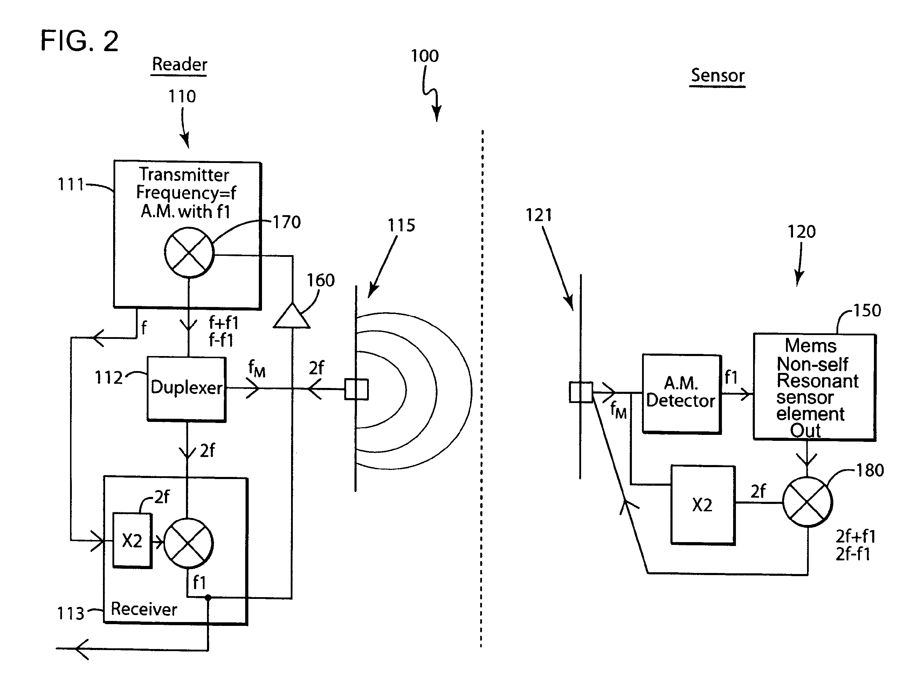

FIG. 1 depicts a system wherein the resonant sensor element 125 is a self-resonant sensor element 125. The present invention also includes a system such as shown in FIG. 2 using a non-self resonant sensor element 150.

In the exemplary embodiment shown in FIG. 2 having a non-self resonant sensor element 150, a feedback amplifier 160 may be included in the reader device 100. Further, both the transmitter 111 and the sensor 120 of the embodiment of FIG. 2 may include amplitude modulators 170 and 180, respectively.

In the embodiment of FIG. 2 having the non-self resonant sensor element 150, the signal received by the reader device 110 is amplified by the feedback amplifier 160 and retransmitted. The amplitude modulator 170 associated with the transmitter 111 may serve to produce a field frequency *f* that is modulated by *f1*.

FIGs. 3 and 4 depict embodiments of the sensor of the invention using MEMS technology. FIG. 3 depicts a sensor 300 having a self-resonant sensor element 301 incorporated into MEMS element 302. Further incorporated onto the MEMS element 302 may be an inductor L₁ and capacitor C₁ arrangement where L₁ < C₁, set to resonate at *2f.* As the sensor resonates, the value of C1 changes which shifts the resonant frequency of L1 and C1. This changing resonance causes a change of impedance that modulates the amplitude of the *2f* frequency passed to the antenna.

In the embodiment of FIG. 3, a non-linear element (NLE) 303 acts as a multiplier and power supply, the functions of those elements described above with reference to FIG. 1. Inductor L₂ is operable to filter the RF from a d.c. supply rectified by the NLE 303. It should be noted that while the examples in FIGs. 3 and 4 use a diode as the NLE, the invention may include other types of NLE's known in the art.

FIG. 4 depicts a sensor 400 having a non self-resonant sensor element 401 incorporated into MEMS element 402. Further incorporated onto the MEMS element 402 may be a resonator driver 403 and NLE 404. In the embodiment of FIG. 4, the resonator drive is demodulated by the NLE 404 from an amplitude modulated (A.M.) incident field. The non self-resonant sensor element of FIG. 4 requires a maintaining circuit in the reader as described for FIG. 2.

While the present invention has been particularly shown and described with reference to exemplary embodiments thereof, it will be understood by those skilled in the art that various changes in form and details may be made therein without departing from the scope of the invention as defined by the appended claims.

## Claims

1. A system (100) for reading data using a radio frequency (RF) field, the system comprising:
a reader device (110) structured to emit the RF field; and
a sensor (120) including a micro-engineered mechanical structure (MEMS) resonant element, the sensor structured to receive the emitted RF field and re-radiate a signal to the reader device, wherein the sensor (120) includes an aerial (121) operable to acquire energy from the RF field and a frequency multiplying element (122) operable to change a frequency of the incoming RF energy from frequency fto frequency *fm*, wherein *fm* is a harmonic of *f*; and further comprising: a modulator (125) structured to mix frequency *fm* with a sensor output frequency *f1* to produce upper and lower sidebands, *fm+f1* and *fm-f1*, respectively, wherein frequency *fm* and the upper and lower sidebands are re-radiated by the aerial for reception by the reader device;
wherein the reader device (110) is further structured to receive and process the signal to obtain the original sensor element frequency (f₁).

2. The system of claim 1, wherein the sensor aerial (121) is formed by a pattern of conductors integrated into the MEMS resonant element and operable to acquire energy from the RF field.

3. The system of claim 1, wherein the RF field is of frequency *f* that gives rise to an incident field at the sensor (120).

4. The system of claim 1, wherein the sensor is a length of about 1.5 mm, includes a half-wave dipole aerial at 100 GHZ and the MEMS resonant element for sensing at about 30 kHZ.

5. The system claim 1, wherein the MEMS resonant element is a self-resonant element (301) having no wired connections.

6. The system of claim 1, wherein the MEMS resonant element is a non-self resonant element (150), and the reader device (110) includes a feedback amplifier (160).

7. The system of claim 1, wherein the RF field gives rise to an incident field at the sensor (120), and the frequency *f* is multiplied by the frequency multiplying element such that the signal can be received by the reader without interference from the incident field.

8. The system of claim 7, wherein the multiplication is performed by generation of harmonics requiring at least one of a multiplier component and a non-linear device (303).

9. The system of claim 7, wherein the multiplication is performed by a diode, the diode being one of formed on the MEMS resonant element or a discrete component.

10. The system of claim 1, wherein the modulator (125) is a capacitive element.

11. The system of claim 1, wherein the sensor (120) is powered by energy harvesting.

12. A method for reading data using a radio frequency (RF) field, the method comprising:
emitting the RF field to a sensor (120), the sensor including a micro-engineered mechanical structure (MEMS) resonant element;
receiving the emitted RF field at the sensor (120), processing the emitted RF field using the MEMS resonant element, and re-radiating a signal obtained from the RF field to a reader device; and
receiving the signal at the reader device (110) and processing the signal to obtain an original sensor element frequency; the method further comprising:
acquiring energy from the RF field at the sensor (120) and changing a frequency of the incoming RF energy from frequency *f* to frequency *fm*, wherein *fm* is a harmonic of *f*; and
mixing frequency *fm* with a sensor output frequency *f1* to produce upper and lower sidebands, *fm+f1* and *fm-f1,* respectively, and re-radiating the frequency *fm* and the upper and lower sidebands for reception by the reader device (110).

13. The method of claim 12, wherein the RF field is of frequency *f* that gives rise to an incident field at the sensor (120), and further comprising multiplying the frequency *f* such that the signal can be received by the reader device (110) without interference from the incident field.

14. The method of claim 13, further comprising performing the multiplication by generation of harmonics requiring at least one of a multiplier component and a non-linear device.

15. The method of claim 13, further comprising performing the multiplication using a diode, the diode being one of formed on the MEMS resonant element or a discrete component.

16. A sensor providing a frequency output operating in a radio field environment, the sensor comprising:
an aerial (121) structured to acquire energy from a radiated field at frequency *f*;
a micro-engineered mechanical structure (MEMS) resonant element structured to process the energy;
a frequency multiplying element (122) operable to change a frequency of the incoming RF energy from the frequency fto frequency *fm,* wherein fin is a harmonic of *f*; and
a modulator (125) structured to mix frequency *fm* with a sensor output frequency *f1* to produce upper and lower sidebands, *fm+f1* and *fm-f1,* respectively, and wherein frequency *fm* and the upper and lower sidebands are re-radiated by the aerial for reception by a reading device (110).

## Patentansprüche

1. System (100) zum Auslesen von Daten unter Anwendung eines Hochfrequenz-(HF)-Feldes, wobei das System aufweist:
eine Auslesevorrichtung (110), die dafür aufgebaut ist, das HF-Feld zu emittieren; und
einen Sensor (120), der ein in Form einer mikrotechnisch mechanischen Struktur (MEMS) aufgebautes Resonanzelement enthält, wobei der Sensor dafür aufgebaut ist, das emittierte HF-Feld zu empfangen und ein Signal an die Auslesevorrichtung zurückzusenden, wobei der Sensor (120) eine Antenne (121), die zum Entziehen von Energie aus dem HF-Feld betrieben werden kann, und ein Frequenzvervielfachungselement (122), das zum Verändern einer Frequenz der ankommenden HF-Energie von einer Frequenz *f* zu einer Frequenz *fm* betrieben werden kann, enthält, wobei *fm* eine Oberwelle von *f* ist; und ferner aufweist: einen Modulator (125), der dafür aufgebaut ist, die Frequenz *fm* mit einer Sensorausgangsfrequenz *f1* zu mischen, um ein oberes und unteres Seitenband *fm* + *f1* bzw. *fm - f1* zu erzeugen, wobei die Frequenz *fm* und das obere und untere Seitenband durch die Antenne zum Empfang durch die Auslesevorrichtung zurückgestrahlt werden;
wobei die Auslesevorrichtung (110) ferner dafür aufgebaut ist, das Signal zu empfangen und zu verarbeiten, um die ursprüngliche Sensorelementfrequenz (*f1*) zu erhalten.

2. System nach Anspruch 1, wobei die Sensorantenne (121) durch ein Muster von Leitern ausgebildet ist, die in das MEMS-Resonanzelement integriert sind und zum Entziehen von Energie aus dem HF-Feld betrieben werden können.

3. System nach Anspruch 1, wobei das HF-Feld eine Frequenz *f* hat, die zu einem einfallenden Feld bei dem Sensor (120) führt.

4. System nach Anspruch 1, wobei der Sensor eine Länge von ca. 1,5 mm hat, eine Halbwellen-Dipolantenne bei 100 GHz und das MEMS-Resonanzelement zum Messen bei ca. 30 kHz enthält.

5. System nach Anspruch 1, wobei das MEMS-Resonanzelement ein Eigenresonanzelement (301) ist, das keine verdrahteten Verbindungen hat.

6. System nach Anspruch 1, wobei das MEMS-Resonanzelement ein Element (150) ohne Eigenresonanz ist, und die Auslesevorrichtung (110) einen rückgekoppelten Verstärker (160) enthält.

7. System nach Anspruch 1, wobei das HF-Feld zu einem Einfallsfeld bei dem Sensor (120) führt und die Frequenz *f* durch das Frequenzvervielfachungselement dergestalt vervielfacht wird, dass das Signal durch die Lesevorrichtung ohne Störung aus dem Einfallsfeld empfangen werden kann.

8. System nach Anspruch 7, wobei die Vervielfachung durch Erzeugung von Oberwellen durchgeführt wird, was wenigstens eine Vervielfachungskomponente und eine nichtlineare Vorrichtung (303) erfordert.

9. System nach Anspruch 7, wobei die Vervielfachung durch eine Diode durchgeführt wird, wobei die Diode eine von eine von einer auf dem MEMS-Resonanzelement ausgebildeten oder einer diskreten Komponente ist.

10. System nach Anspruch 1, wobei der Modulator (125) ein kapazitives Element ist.

11. System nach Anspruch 1, wobei der Sensor (120) durch Energiegewinnung mit Energie versorgt wird.

12. Verfahren zum Auslesen von Daten unter Verwendung eines Hochfrequenz-(HF)-Feldes, wobei das Verfahren die Schritte aufweist:
Emittieren des HF-Feldes zu einem Sensor (120), wobei der Sensor ein in Form einer mikrotechnisch mechanischen Struktur (MEMS) aufgebautes Resonanzelement enthält;
Empfangen des emittierten HF-Feldes bei dem Sensor (120), Verarbeiten des emittierten HF-Feldes unter Verwendung des MEMS-Resonanzelementes und Zurückstrahlen eines aus dem HF-Feld erhaltenen Signals an eine Auslesevorrichtung; und
Empfangen des Signals an der Auslesevorrichtung (110) und Verarbeiten des Signals, um eine ursprüngliche Sensorelementfrequenz zu erhalten; wobei das Verfahren ferner die Schritte aufweist:
Entziehen von Energie aus dem HF-Feld bei dem Sensor (120) und Verändern einer Frequenz der ankommenden HF-Energie von einer Frequenz *f* zu einer Frequenz *fm*, wobei *fm* eine Oberwelle von *f* ist; und
Mischen der Frequenz *fm* mit einer Sensorausgangsfrequenz *f1,* um ein oberes und unteres Seitenband *fm* + *f1* bzw. *fm - f1* zu erzeugen, und Zurückstrahlen der Frequenz *fm* und des oberen und unteren Seitenbandes durch die Antenne zum Empfang durch die Auslesevorrichtung;

13. Verfahren nach Anspruch 12, wobei das HF-Feld eine Frequenz *f* hat, die zu einem Einfallsfeld bei dem Sensor (120) führt, und ferner den Schritt der Vervielfachung der Frequenz *f* dergestalt aufweist, dass das Signal durch die Auslesevorrichtung (110) ohne Störung aus dem Einfallsfeld empfangen werden kann.

14. Verfahren nach Anspruch 13, ferner mit dem Schritt der Vervielfachung durch Erzeugung von Oberwellen, was wenigstens eine Vervielfachungskomponente und eine nichtlineare Vorrichtung erfordert.

15. Verfahren nach Anspruch 13, ferner mit dem Schritt der Vervielfachung unter Verwendung einer Diode, wobei die Diode eine von eine von einer auf dem MEMS-Resonanzelement ausgebildeten oder einer diskreten Komponente ist.

16. In einer Hochfrequenzumgebung arbeitender, ein Frequenzausgangssignal liefernder Sensor, wobei der Sensor aufweist:
eine Antenne (121), die zum Entziehen von Energie aus einem bei einer Frequenz *f* ausgestrahlten HF-Feld aufgebaut ist;
ein in Form einer mikrotechnisch mechanischen Struktur (MEMS) aufgebautes Resonanzelement zum Verarbeiten der Energie;
ein Frequenzvervielfachungselement (122), das zum Verändern einer Frequenz der ankommenden HF-Energie von einer Frequenz *f* zu einer Frequenz *fm* betrieben werden kann, wobei *fm* eine Oberwelle von *f* ist; und
einen Modulator (125), der dafür aufgebaut ist, die Frequenz *fm* mit einer Sensorausgangsfrequenz *f1* zu mischen, um ein oberes und unteres Seitenband *fm* + *f1* bzw. *fm - f1* zu erzeugen, wobei die Frequenz *fm* und das obere und untere Seitenband durch die Antenne zum Empfang durch die Auslesevorrichtung zurückgestrahlt werden.

## Revendications

1. Système (100) pour lire des données à l'aide d'un champ de radiofréquence (RF), le système comportant :
un dispositif de lecture (110) conçu pour émettre le champ RF ; et
un capteur (120) comprenant un élément résonnant à structure micro-électromécanique (MEMS), le capteur étant conçu pour recevoir le champ RF émis et réémettre un signal vers le dispositif de lecture, le capteur (120) comprenant une antenne (121) servant à acquérir de l'énergie du champ RF et un élément multiplicateur (122) de fréquence servant à faire passer une fréquence de l'énergie RF entrante de la fréquence *f* à la fréquence *fm, fm* étant une harmonique de *f* ; et comportant en outre : un modulateur (125) conçu pour mélanger la fréquence *fm* avec une fréquence de sortie *fl* du capteur afin de produire des bandes latérales supérieure et inférieure, respectivement *fm+fl* et *fm-fl,* la fréquence *fm* et les bandes latérales supérieure et inférieure étant réémises par l'antenne pour être reçues par le dispositif de lecture ;
le dispositif de lecture (110) étant en outre conçu pour recevoir et traiter le signal afin d'obtenir la fréquence d'origine *(f₁)* de l'élément du capteur.

2. Système selon la revendication 1, dans lequel l'antenne (121) du capteur est constituée par une combinaison de conducteurs intégrés dans l'élément résonnant à MEMS et sert à acquérir de l'énergie du champ RF.

3. Système selon la revendication 1, dans lequel le champ RF est à une fréquence *f* qui donne lieu à un champ incident dans le capteur (120).

4. Système selon la revendication 1, dans lequel le capteur a une longueur d'environ 1,5 mm, comprend une antenne demi-onde dipôle à 100 GHz et l'élément résonnant à MEMS pour une détection à environ 30 kHz.

5. Système selon la revendication 1, dans lequel l'élément résonnant à MEMS est un élément auto-résonnant (301) sans aucune connexion câblée.

6. Système selon la revendication 1, dans lequel l'élément résonnant à MEMS est un élément non auto-résonnant (150) et le dispositif de lecture (110) comprend un amplificateur à contre-réaction (160).

7. Système selon la revendication 1, dans lequel le champ RF donne lieu à un champ incident dans le capteur (120), et la fréquence *f* est multipliée par l'élément multiplicateur de fréquence de façon que le signal puisse être reçu par le lecteur sans perturbation due au champ incident.

8. Système selon la revendication 7, dans lequel la multiplication est effectuée par production d'harmoniques nécessitant un composant multiplicateur et/ou un dispositif non linéaire (303).

9. Système selon la revendication 7, dans lequel la multiplication est effectuée par une diode, la diode étant formée soit sur l'élément résonnant à MEMS soit sur un composant discret.

10. Système selon la revendication 1, dans lequel le modulateur (125) est un élément capacitif.

11. Système selon la revendication 1, dans lequel le capteur (120) est alimenté par captage d'énergie.

12. Procédé pour lire des données à l'aide d'un champ de radiofréquence (RF), le procédé comportant :
l'émission du champ RF vers un capteur (120), le capteur comprenant un élément résonnant à structure micro-électromécanique (MEMS) ;
la réception, dans le capteur (120), du champ RF émis, le traitement du champ RF émis à l'aide de l'élément résonnant à MEMS et la réémission, vers un dispositif de lecture, d'un signal obtenu à partir du champ RF ; et
la réception du signal dans le dispositif de lecture (110) et le traitement du signal pour obtenir une fréquence d'origine de l'élément du capteur, le procédé comportant en outre :
l'acquisition d'énergie du champ RF dans le capteur (120) et le passage d'une fréquence de l'énergie RF entrante de la fréquence *f* à la fréquence *fm, fm* étant une harmonique de *f* ; et
le mélange de la fréquence *fm* avec une fréquence de sortie *fl* du capteur afin de produire des bandes latérales supérieure et inférieure, respectivement *fm+fl* et *fm-fl,* et la réémission de la fréquence *fm* et des bandes latérales supérieure et inférieure pour leur réception par le dispositif de lecture (110).

13. Procédé selon la revendication 12, dans lequel le champ RF est à une fréquence *f* qui donne lieu à un champ incident dans le capteur (120), et comportant en outre la multiplication de la fréquence de façon que le signal puisse être reçu par le dispositif de lecture (110) sans perturbation du fait du champ incident.

14. Procédé selon la revendication 13, comportant en outre la réalisation de la multiplication par production d'harmoniques nécessitant un composant multiplicateur et/ou un dispositif non linéaire.

15. Procédé selon la revendication 13, comportant en outre la réalisation de la multiplication à l'aide d'une diode, la diode étant formée soit sur l'élément résonnant à MEMS soit sur un composant discret.

16. Capteur produisant une sortie de fréquence fonctionnant dans un environnement de champ de radiofréquence, le capteur comportant :
une antenne (121) conçue pour acquérir de l'énergie d'un champ émis à une fréquence *f* ;
un élément résonnant à structure micro-électromécanique (MEMS) conçu pour traiter l'énergie ;
un élément multiplicateur (122) de fréquence servant à faire passer une fréquence de l'énergie RF entrante de la fréquence *f* à la fréquence *fm, fm* étant une harmonique de *f* ; et
un modulateur (125) conçu pour mélanger la fréquence *fm* avec une fréquence de sortie *fl* du capteur afin de produire des bandes latérales supérieure et inférieure, respectivement *fm*+*fl* et *fm-fl,* la fréquence *fm* et les bandes latérales supérieure et inférieure étant réémises par l'antenne pour être reçues par un dispositif de lecture (110).
